# EUROPEAN PATENT APPLICATION

(11) **EP 1 302 695 A1**
(43) Date of publication of application: **16.04.2003**
(21) Application number: 01308675.6
(22) Date of filing: 11.10.2001
(51) Int. Cl.: F16F 15/34

(54) **Balance weight assembly**

(71) Applicant: BW Manufacturing Limited, Welshpool, Powys SY21 7DF (GB)
(72) Inventor: Halle, John William Charles, Shrewsbury, SY3 7RA (GB); Jones, Nicholas Michael, Newtown SY16 4JN (GB)
(74) Representative: Kinton, Colin David

(57) **Abstract**

A balance weight assembly comprises a clip member (10) and a weighting member (20). The clip member (10) has opposed first (11) and second (12) surfaces and a first portion (13) to engage the rim of a wheel, together with a second portion (14) to engage the weighting member (20).

## Description

This invention relates to a balance weight assembly for use in operative association with a wheel of a motor vehicle.

Hitherto, two types of balance weight assembly have been in general use.

The first known type of assembly comprises a weighting member, made of a castable material and having a clip member integral therewith, the weighting member being cast around the clip member. The clip is generally made of a "springy" metal and, in use, engages the rim of a wheel to support the weighting member in direct contact with the surface of the wheel. Since the weighting member is cast so as to be integral with the clip member, it is necessary to select the material of the weighting member so that the "springy" properties of the clip member are not adversely affected by the casting temperature.

The weighting member has hitherto been cast from lead (which becomes castable at a temperature which does not affect the "springy" properties of the clip member). However, environmental considerations and forthcoming legislation require an alternative material to be found for this purpose. Whilst tin would, in theory, be an acceptable and feasible substitute for lead, its cost (relative to that of lead) makes such a substitution very expensive.

The second known type of assembly comprises discrete clip and weighting members. In use, the clip member engages the rim of a wheel and again holds the weighting member in direct contact with the surface of the wheel. Thus, both the clip member and the weighting member have to be separately configured for any given configuration of vehicle wheel.

The applicant has devised a balance weight assembly in which the clip member and weighting member are separate and in which the clip member, in use, retains the weighting member in contact with the surface of the clip member which is remote from the surface of the wheel.

Such an assembly can be supplied with the clip member and the weighting member as separate items, for assembly by the user. Alternatively, the assembly can be supplied in a pre-assembled condition.

Accordingly, the present invention provides a balance weight assembly for use in operative association with a wheel of a motor vehicle, said assembly comprising a clip member and a discrete weighting member, in which the clip member has opposed first and second surfaces and includes a first portion adapted, in use, to engage a rim of the wheel, whereby the first surface of the clip member is held in contact with at least part of the surface of the wheel, together with a second portion integral with said first portion, said second portion being adapted, in use, to engage and retain the weighting member in contact with the second surface of the clip member.

Preferably, the clip member acts, in use, as a spring-clip.

Preferably, the second portion of the clip member is adapted, in use, to receive the weighting member in a push-fit. Alternatively, the second portion of the clip member may be adapted, in use, to receive the weighting member in a spring-fit. The weighting member may further be provided with at least one adhesive-bearing surface, so as to enhance its retention in contact with the clip member.

The present invention further provides a balance weight assembly as hereinbefore described, the assembly comprising a clip member and a weighting member in a pre-assembled condition.

The clip member may suitably be made of a metal, for example spring-steel.

The weighting member may suitably be made of a metal. Alternatively, the weighting member may be made of a plastics material or other materials (such as ceramic materials).

In a first preferred embodiment of the present invention, the weighting member is of substantially parallelepiped configuration.

In a second preferred embodiment of the present invention, the weighing member is of arcuate configuration. Such an arcuate weighting member will more exactly fit the curvature of a wheel rim. Also, any given curvature may apply for more than one wheel.

The weighting member according to the present invention may suitably be made of a pliable or ductile material.

Further, the weighting member may be provided with one or more location notches. Such notches act, in use, to engage complementary location members on the clip member, thereby retaining the weighting member in positive engagement with the clip member. The notches can also act, in use, to facilitate centralisation of the weighting member relative to the clip member.

The present invention will be illustrated, merely by way of example, in the following description and with reference to the accompanying drawings.

In the drawings (wherein like numerals denote like parts):
**Figure 1** shows a balance weight assembly in accordance with the first preferred embodiment of the present invention;
**Figure 2** shows a balance weight assembly in accordance with one alternative form of the second preferred embodiment of the present invention;
**Figure 3** shows a balance weight assembly in accordance with a second alternative form of the second preferred embodiment of the present invention.

Referring to the drawings, the assembly comprises a clip member 10 and a weighting member 20.

The clip member 10 has opposed first and second surfaces, 11 and 12 respectively, and includes a first portion 13 which, in use, engages a rim of a wheel (not shown), so that substantially all of the first surface 11 is held in contact with part of the wheel. The clip member is also provided with a second portion 14 (integral with portion 13). Portion 14 is adapted, in use, to engage the weighting member 20 and to removably retain it in contact with the second surface 12, for example by means of a push-fit in the direction of arrow A.

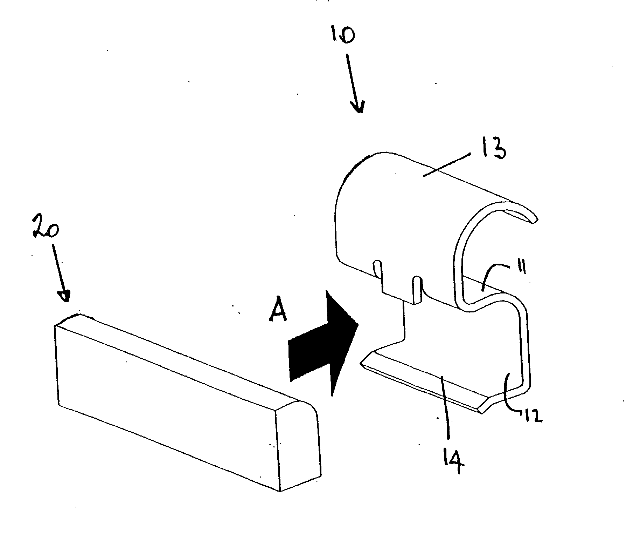

In the assembly shown in Figure 1, the weighting member 20 is of substantially parallelepiped configuration.

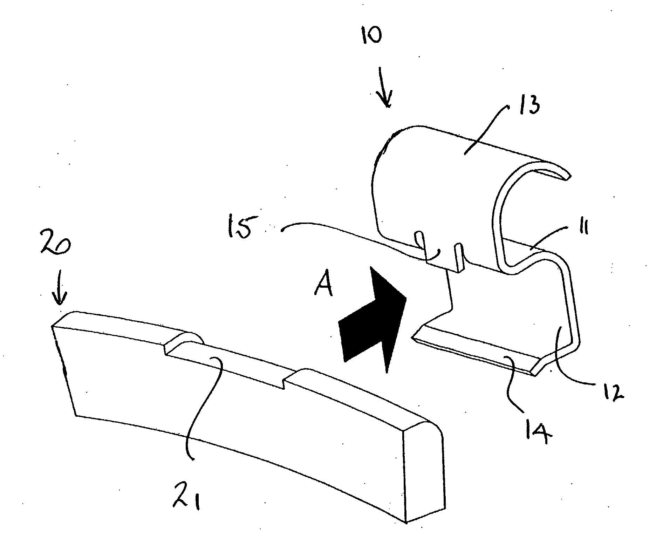

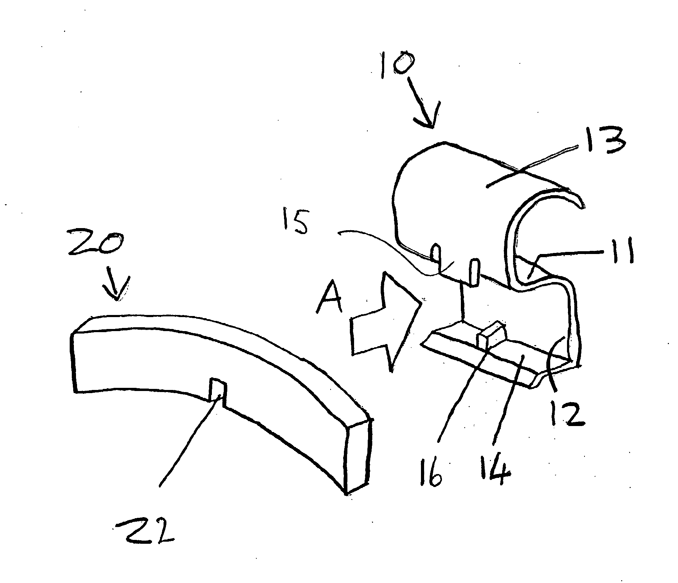

In the assemblies shown in Figures 2 and 3, the weighting member 20 is of arcuate configuration.

Referring to Figure 2, weighting member 20 is provided with a notch 21. In use, the notch 21 is engaged by location member 15 on the clip member 10.

Referring to Figure 3, weighting member 20 is provided with a notch 22. In use, the notch 22 is engaged by location member 16 on the clip member 10.

## Claims

1. A balance weight assembly for use in operative association with a wheel of a motor vehicle, **characterised by** a clip member (10) and a discrete weighting member (20), in which the clip member (10) has opposed first (11) and second (12) surfaces and includes a first portion (13) adapted, in use, to engage a rim of the wheel, whereby the first surface (11) of the clip member (10) is held in contact with at least part of the surface of the wheel, together with a second portion (14) integral with said first portion (13), said second portion (14) being adapted, in use, to engage and retain the weighting member (20) in contact with the second surface (12) of the clip member (10).

2. An assembly according to Claim 1, **characterised in that** the clip member (10) acts, in use, as a spring-clip.

3. An assembly according to Claim 1 or 2, **characterised in that** the second portion (14) of the clip member (10) is adapted, in use, to receive the weighting member (20) in a push-fit.

4. An assembly according to Claim 1 or 2, **characterised in that** the second portion (14) of the clip member (10) is adapted, in use, to receive the weighting member (20) in a spring-fit.

5. An assembly according to any preceding claim, **characterised in that** the weighting member (20) is further provided with at least one adhesive-bearing surface.

6. An assembly according to any preceding claim, **characterised by** comprising a clip member (10) and a weighting member (20) in pre-assembled condition.

7. An assembly according to any preceding claim, **characterised in that** the clip member (10) is made of a metal, e.g. spring-steel.

8. An assembly according to any preceding claim, **characterised in that** the weighting member (20) is made of a metal, a plastics material or a ceramic material.

9. An assembly according to any one of the preceding claims, **characterised in that** the weighting member (20) is of substantially parallelepiped configuration.

10. An assembly according to any one of Claims 1 to 8, **characterised in that** the weighting member (20) is of arcuate configuration.

11. An assembly according to any one of the preceding claims, **characterised in that** the weighting member (20) is made of a pliable or ductile material.

12. An assembly according to any one of the preceding claims, **characterised in that** the weighting member (20) is further provided with one or more location notches (21, 22).

13. An assembly according to Claim 12, **characterised in that** each notch acts, in use, to engage a complementary location member (15, 16) on the clip member (10).
